# EUROPEAN PATENT SPECIFICATION

(11) **EP 1 113 435 B1**
(45) Date of publication and mention of the grant of the patent: **10.01.2007**
(21) Application number: 99310630.1
(22) Date of filing: 29.12.1999
(51) Int. Cl.: G11B 20/10, G11B 27/10

(54) **Identification of audio channels**
Kennzeichen von Tonkanälen
Identification de canaux audio

(43) Date of publication of application: 04.07.2001
(60) Divisional application: 02078173.8
(73) Proprietor: SAMSUNG ELECTRONICS CO., LTD., Suwon-City, Kyungki-do (KR)
(72) Inventor: Moon, Seong-jin, Youngdeunpo-gu, Seoul (KR); Oh, Young-nam, Pundang-gu, Seongnam-city, Kyungki-do (KR); Chung, Tae-yun, Kwacheon-city, Kyungki-do (KR); Kang, Jung-suk, Songpa-gu, Seoul (KR); Park, Pan-gie, Youngtong-dong, Paldal-gu, Suwon-city (KR); Park, Bong-kil, Kwanak-gu, Seoul (KR)
(74) Representative: Robinson, Ian Michael

(56) References cited:
- EP-A- 0 521 487
- EP-A- 0 727 780
- EP-A- 0 757 506
- EP-A- 0 855 715
- WO-A-95/12276

## Description

The present invention relates to a method for assigning an audio channel identification (ID) by which it is possible to follow up and select the audio channel selected by a user even when a program or an audio data stream is changed in an audio/video (A/V) device for reproducing a program including a plurality of audio data streams.

Currently, a moving picture engineering group (MPEG) and AC3 are often used as a method for compressively encoding an audio signal. In a linear pulse code modulation (PCM), the audio signal is not compressively encoded but recorded as it is. In digital TV broadcasting or video CDS and digital video disks (DVDs) which are digital A/V devices, the MPEG is mainly used.

When the encoded data streams of MPEG A/V data and other data streams are integrated and applied to a real application, it is necessary to make a data stream by integrating these data streams. Auxiliary data can be additionally used according to a certain application. The roll of the MPEG system is synchronizing and multiplexing video and audio data.

In the MPEG system, multiplexing by packets is adopted. Each of the video and audio data is divided into data streams called packets having an appropriate length, information such as headers are attached to the packets, and the packets of the video and audio data are multiplexed.

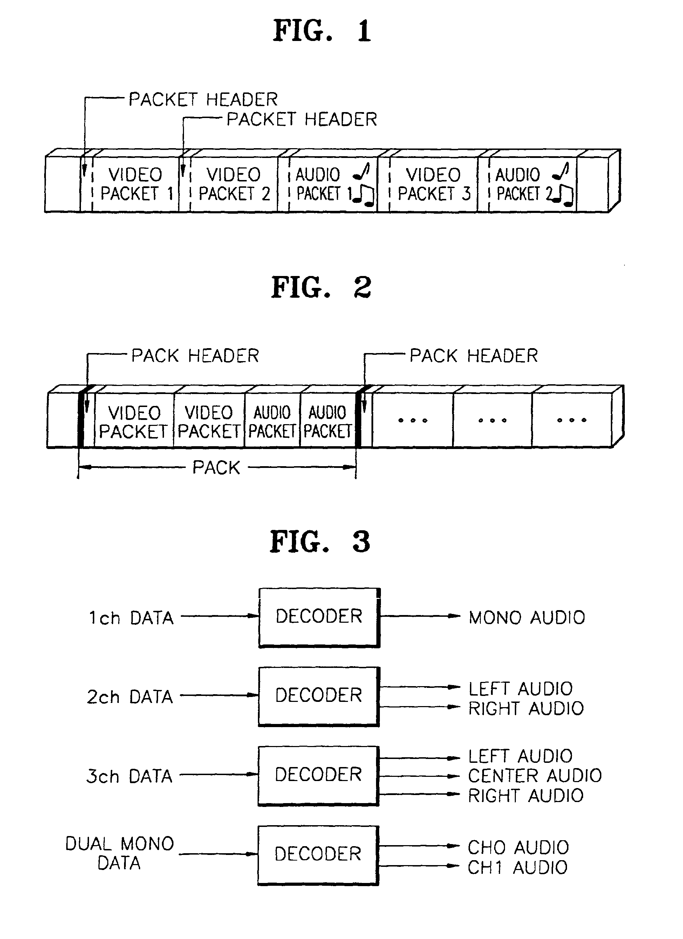

The packets include information for identifying whether the data items are video or audio data in a region called a packet header as shown in Figure 1. The length of the packet depends on a transmission medium or application.

Table 1 illustrates the contents of the packet headers shown in Figure 1.

**Table 1**

| Main items | |
|---|---|
| Packet_start_code_prefix | "00 00 01"h |
| stream_id | 1 byte, for distinguishing kinds of data items |
| PTS value | |
| (DTS value) | |
| Data | Video data, MPEG audio data or private data |

In Table 1, Packet_start_code_prefix represents the start of a packet and stream_id represents kinds of data items in a packet. For example, in the case of video data, stream_id is a binary code "1110 0000"b. In the case of audio data, stream_id is a binary code "1100 0***"b. Here, *** shows that eight kinds of data streams can exist from 000b to 111b. In the MFEG system, other data items besides the two data items are classified as private streams. A code "1011 1101"b can be used for the private stream.

A presentation time stamp (PTS) and a decoding time stamp (DTS), defined in the MPEG system standard, respectively represent time taken to output and decode a presentation unit in the video or audio data. The presentation unit is a frame of a picture in the video data and a frame of audio in the audio data. The DTS is not necessary in the case of the audio data.

Except MPEG audio data, audio data such as AC3 or LPCM is realized by private streams. The content of the packet header adopted to the private streams is shown in Table 2.

**Table 2**

| Main items | |
|---|---|
| Packet start code-prefix | "00 00 01"h |
| stream_id | "1011 1101"b |
| PTS value | |
| substream_id | AC3 or LPCM |
| number_of_audio_channels | Number of audio channels |
| Data | |

In the Table 2, the substream id is used in order to distinguish the kinds of audio data encoding such as AC3 or LPCM. For example, in the case of the AC3, the substream_id is "1010 0***"b. Here, *** means that up to eight data streams can exist like in the MPEG audio. In the MPEG system, one program can have various video data streams and audio data streams.

The term "number_of_audio_channels" denotes the number of channels. There can be 1ch, 2ch, 3ch, 4ch, and a dual mono channel. Here, channels are different from channels selected by a user. Namely, the above channels appear as one channel to the user excluding the dual mono. The dual mono is recognized as two channels.

In a MPEG-1 or MPEG-2 program stream (PS), an upper layer of the video or audio packet, called a pack, exists. In general, a pack formed by integrating a plurality of packets is considered to be a basic unit. Figure 2 shows the structure of the pack. Additional information for a time based reference for synchronous reproduction exists in a pack header.

Table 3 shows the contents of the pack header shown in Figure 2.

**Table 3**

| Main items | |
|---|---|
| Pack_start_code | "00 00 01 BA"h |
| "01" | shows that data is MPEG-2 |
| SCR value | |
| program_mux_rate | |
| pack_stuffing_length | |

In the Table 3, the Pack_start _code is a code from which pack data starts. SCR value represents the time at which the pack data reaches the buffer of a decoder and is used to synchronize the system clock of an encoding port with the system clock of a decoding port. The program_mux_rate represents a transmission rate at which video, audio, and private data items are multiplexed and transmitted. In order to decode data correctly, the data must be transmitted at a transmission rate higher than the transmission rate. The pack_stuffing_length represents the number of dummy data.

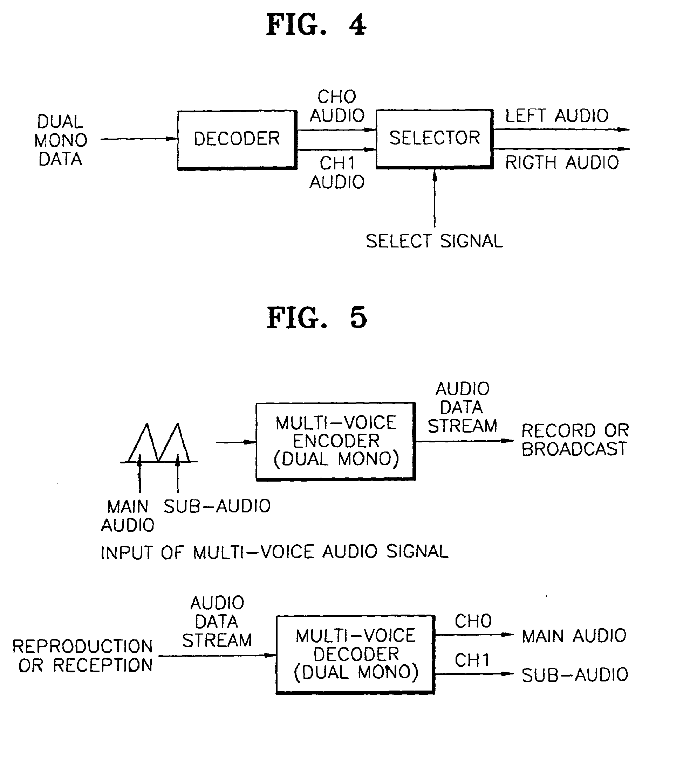

Figure 3 schematically shows channels and audio signals corresponding thereto. As shown in Figure 3, audio signals are output through decoders. The data of the dual mono channel having outputs, the audio data of CH0 and the audio data of CH1 is similar to the 2ch data. However, the dual mono data is different from the 2ch data in that left and right audio signals are related to each other in the 2ch data, meanwhile CH0 and CH1 are separate audio signals in the dual mono data,

For example, Korean language audio data can be loaded into CH0 and English language audio data can be loaded into CH1 in the dual mono channel. Therefore, in general, only one of the two channels is output or the CH0 audio data and the CH1 audio data are output through a left speaker and a right speaker, respectively.

Figure 4 shows an example of an apparatus for decoding and outputting the data of the dual mono channel. When a select signal is 0, the apparatus shown in Figure 4 outputs CH0 audio as left audio and right audio. When the select signal is 1, the apparatus outputs CH1 audio as left audio and right audio. When the select signal is 2, the apparatus outputs CH0 audio and CH1 audio as left audio and right audio, respectively.

Figure 5 schematically shows a method of recording or reproducing a multi voice audio signal as dual mono audio data. The multi voice audio signal is formed of main audio data and sub-audio data. When data is recorded, the main audio data and the sub-audio data are encoded into an audio data stream through a multi-voice encoder. At this time, the main audio data is encoded into the CH0 audio data and the sub-audio is encoded into the CH1 audio data.

When data is reproduced, an audio data stream is decoded into the CH0 audio data and the CH1 audio data through a multi-voice decoder. The CH0 audio data is main audio data and the CH1 audio data is sub-audio data.

Here, it is assumed that a plurality of audio data streams exist. As an example, when two audio data streams exist in an A/V data stream, the user can select one among the two channels. When the selected audio data stream is dual mono data, that is, sub-audio data streams are included, the user can select two channels.

EP-A-0521487 (SONY CORP.) discloses an information recording medium and reproducing device. In this document, there is described an embodiment in which identifier numbers 0, 1, 2 and 3 correspond to English, French, German and Japanese, respectively. One of the identifier numbers is previously set as a default value. For instance, in products to be exported to the USA and UK, the identifier 0 is set as the default value. Subsequently, a controller reads default language data and determines whether or not multiplex audio data contains audio data according with the default. If so, then the controller controls a synthesizer to select the audio data according with the default language data and, if not then the controller controls the synthesizer tp select audio data located at a first position in the multiplex audio data.

It is an aim of at least embodiments of the present invention to provide a method of assigning a channel identification (ID) to a sub-audio data stream included in an audio data stream when each audio data stream is in a dual mode in an audio/video (A/V) stream including a plurality of audio data streams.

It is another aim of at least embodiments of the present invention to provide a method of selecting the same kind of audio channel by following up the audio channel selection input of a user although a program or an audio data stream is changed in an A/V device for reproducing a plurality of audio data streams which allow a dual mono mode.

It is still another aim of at least embodiments of the present invention to provide an apparatus suitable for the above method of selecting audio channels.

According to the present invention there is provided a method of assigning audio channel IDs as set forth in claim 1 appended hereto. Preferred features of the present invention will be apparent from the description which follows.

For a better understanding of the invention, and to show how embodiments of the same may be carried into effect, reference will now be made, by way of example, to the accompanying diagrammatic drawings in which:
Figure 1 shows the structure of packets in an MPEG system;
Figure 2 shows the structure of a pack in the MPEG system;
Figure 3 shows audio signals in each channel;
Figure 4 shows an example of an apparatus for decoding and outputting the data of a dual mono channel;
Figure 5 schematically shows a method for recording and reproducing a multi voice audio signal as dual mono audio data; and
Figure 6 is a block diagram showing the structure of an optical recording and reproducing apparatus according to the present invention.

In a method of assigning an audio channel identification (ID) according to the present invention, a separate channel ID is assigned to each audio channel included in a program.

Table 4 shows examples of channel IDs assigned to data streams when three audio data streams are recorded on one program.

**Table 4**

| | Non dual mono | Dual mono | |
|---|---|---|---|
| | Channel ID | | Channel ID |
| Data stream 1 | 1 | CH0 | 1 |
| | | CH1 | 2 |
| Data stream 2 | 3 | CH0 | 3 |
| | | CH1 | 4 |
| Data stream 3 | 5 | CH0 | 5 |
| | | CH1 | 6 |

In other cases excluding the dual mono case, channel IDs such as 2n-1 (n=1, 2, and 3) are given. At this time, n is the same as a data stream number. In the case of dual mono, channel IDs 2n-1 are given to CH0 data and channel IDs of 2n are given to CH1.

when the user presses an audio change key through an apparatus such as a remote controller, numbers larger than the currently reproduced channel ID are sequentially selected and output. When the user selects a channel ID, the audio data stream corresponding to the ID is selected, decoded, and output.

In the audio channel selecting method according to the present invention, when a program is changed, the audio channel selected in a previous program is followed up and selected in a next program. Also, when there is no audio channel before changing the program, a default audio channel is selected.

Here, it is assumed that a new data stream is input when data is reproduced. Audio data different from a previous data stream may be recorded in the new data stream. For example, while one audio data stream, which is dual mono, is being recorded in the previous data stream, two data streams which are not dual mono are recorded in the new data stream.

In the audio channel selecting method according to the present invention, when data corresponding to a channel ID which is to be reproduced exists, the data is selected and reproduced. When there is no corresponding data, by default, the data corresponding to the channel ID-1 is selected and output.

When there is data corresponding to the channel ID which is being reproduced, the data is selected and reproduced. When there is no corresponding data, the current channel ID-1 is searched when the current channel is evenly numbered. When data corresponding to the channel ID-1 exists, the data is selected and output. When the data does not exist, the data corresponding to the channel ID 1 is selected and output. When there is no corresponding data and the current channel is oddly numbered, the data corresponding to the channel ID 1 is selected and output.

Table 5 shows another example of combinations of audio data streams.

**Table 5**

| Program 1 | | Program 2 | |
|---|---|---|---|
| Data stream 1 | CH0;channel ID 1 | Data stream 1 | Channel ID 1 |
| (dual mono) | | (non dual mono) | |
| | CH1;channel ID 2 | | |
| Data stream 2 | CH0;channel ID 3 | Data stream 2 | Channel ID 3 |
| (dual mono) | | (non dual mono) | |
| | CH1;channel ID 4 | | |

For example, when the user presses an audio changing key during the reproduction of program 1, an output audio signal is changed in the order of CH0 of the data stream number 1, CH1 of the data stream number 1, CH0 of the data stream number 2, and CH1 of the data stream number 2.

When program 1 is reproduced by selecting CH0 of the data stream 2 whose channel ID is 3 and it is desired that the next program 2 be reproduced, it is investigated whether data of the channel ID 3 exists. Since the data stream 2 corresponding to the channel ID 3 exists in program 2, the data stream 2 is reproduced.

When the program 1 is reproduced by selecting CH1 of the data stream 2 whose channel ID is 4 and it is desired that the next program be reproduced, it is investigated whether the data of the channel ID 4 exists. Since there is no data corresponding to the channel ID 4 in the program 2, the data stream 1 whose channel ID is 1, which is the default channel, is selected and reproduced.

In another preferable method of changing channels, it is investigated whether there is a channel ID 3 obtained by subtracting 1 from a channel ID 4. When the channel ID exists, the channel ID is selected. When the channel ID does not exist, the data stream 1 whose channel ID is 1 may be selected and reproduced. In this case, since the data of the channel ID 3 exists, the data of the channel ID 3 is reproduced.

According to the method of the present invention, when the channel ID is oddly numbered, the channel is the main audio channel in non dual mono or dual mono. When the channel ID is evenly numbered, the channel is a sub-audio channel in dual mono.

When the user changes the audio channel, it is preferable to the user that the channel is changed regardless of whether the channel of the audio data is classified into separate audio data streams or classified as dual mono.

According to the audio channel selecting method, when an audio changing key is received, the change from main audio to sub-audio is performed in the corresponding audio data stream and a change to the next audio data stream is performed.

When the user selects one audio channel, the currently selected channel is maintained even when the program is changed.

However, when there is no corresponding audio channel, the channel must be changed to an appropriate channel and the changed channel must be selected. At this time, CHO, which is the default channel, is selected and reproduced or the channel closest to the currently selected audio channel is searched for and then reproduced (when the channel ID is evenly numbered, namely, in the case of the sub-audio data, the main audio channel can be considered to be the closest channel, which is the oddly numbered channel ID-1).

Also, when there is no audio data stream corresponding to the currently set channel ID, the channel ID is stored and a basic channel is selected and output by the above-mentioned method or the closest channel is selected and reproduced, and when the audio data stream corresponding to the above channel ID appears, the data is selected and output.

This is done in case the user selects and reproduces a sub-audio channel, then selects and reproduces another program which does not have sub-audio for a short time, and selects and reproduces the original sub-audio when the program with the sub-audio is reproduced. By not doing so, the user must perform changing in order to reproduce the sub-audio.

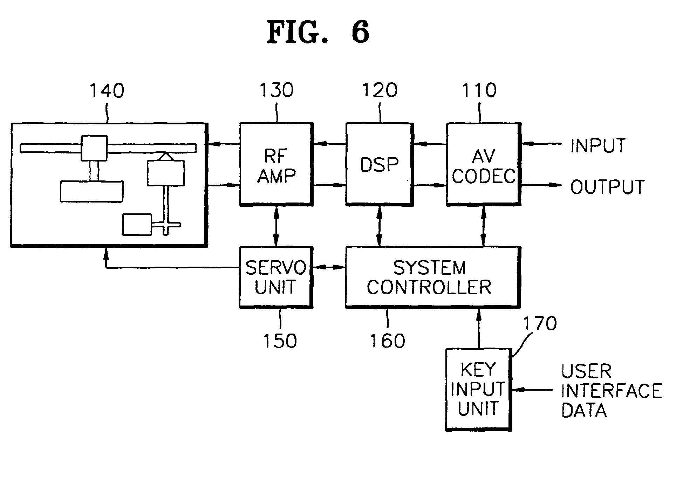

Figure 6 is a block diagram of an optical recording and reproducing apparatus suitable for the present invention. A/v data is recorded and reproduced using a recordable disk. The function of the optical recording and reproducing apparatus can be divided into recording and reproducing.

During the recording of data, an AV codec 110 compressively encodes an A/V signal received from the outside by a predetermined compression scheme and provides information on the magnitude of the compressed data. A digital signal processor (DSP) 120 receives the A/V data supplied from the AV codec 110, assigns additional data for processing an error correction code (ECC), and performs modulation by a predetermined modulation scheme. A high frequency amplifier (RF AMP) 130 converts electrical data provided by the DSP 120 into an optical signal.

A pick-up unit 140 includes an actuator for recording the optical signal from the RF AMP 130 on the disk and performing focusing and tracking. A servo unit 150 receives information required for controlling a servo from the RF AMP 130 and a system controller 160, and controls the servo.

The system controller 160 controls the entire system, determines the encoding mode of audio data, records data on a disk, and controls the data.

During the reproduction of data, the pick-up unit 140 picks up an optical signal from the disk on which data is stored. Data is extracted from the optical signal. The RF AMP 130 converts the optical signal from the pick-up unit 140 into an electrical signal and extracts a servo signal for controlling the servo and modulated data.

The DSP 120 demodulates the modulated data of the electrical signal provided by the RF AMP 130 corresponding to the modulation scheme used for modulating the data and removes additional data by performing the ECC. The servo unit 150 receives information required for controlling the servo from the RF AMP 130 and the system controller 160 and performs the servo operation.

The AV codec 110 decodes the compressed A/V data provided by the DSP 120.and outputs an A/V signal.

The system controller 160 performs user interfacing, for example, it processes the key input of the user, controls the pick-up unit 140, the RF AMP 130, the DSP 120, and the AV codec 110 by the above method, and analyzes an audio data stream and controls the pick-up portion 140, the RF AMP 130, the DSP 120, and the AV codec 110 so as to select and reproduce corresponding audio data when a command for changing the audio channel is received from a key input unit 170.

As mentioned above, according to the channel ID assigning method of the present invention, it is possible to follow up the same channel when an audio signal is selected by assigning different channel IDs to the channels of the audio data streams.

According to the audio channel selecting methods, it is possible to follow up the audio mode selected by a user even when a program or an audio data stream is changed.

## Claims

1. A method of assigning audio channel identifications (ID)in an audio/video (A/V) data stream, in which a plurality of audio data streams is included and each audio data stream includes two sub-audio data streams, the method comprising: in case of a dual mono mode assigning channel IDs 2n-1 and 2n to respective sub-audio streams; and in case of non-dual mono mode assigning channel IDs 2n-1 to respective non-dual mono audio data streams, wherein n represents an order of precedence of each audio data stream in the A/V data stream.

## Patentansprüche

1. Verfahren zum Zuweisen von Audiokanal-Kennungen (identification - ID) in einem Audio-/Video- (A/V-) Datenstrom, in welchem eine Vielzahl von Audio-Datenströmen enthalten ist und jeder Audio-Datenstrom zwei Audio-Unterlagerungs-Datenströme enthält, wobei das Verfahren umfasst:
Zuweisen der Kanalkennungen 2n-1 und 2n zu den entsprechenden Audio-Unterlagerungsströmen im Fall eines dualen Monomode; und
im Fall eines nichtdualen Monomode Zuweisen der Kanalkennungen 2n-1 zu den jeweiligen nichtdualen Monoaudio-Datenströmen, wobei n eine Rangfolge von jedem Audio-Datenstrom in dem A/V-Datenstrom darstellt.

## Revendications

1. Procédé d'attribution d'identifications (ID) de canaux audio dans un flux de données audio/vidéo (A/V), dans lequel une pluralité de flux de données audio sont inclus et chaque flux de données audio inclut deux flux de données audio secondaires, le procédé comportant : dans le cas d'un mode mono mixte, l'affectation d'identificateurs (ID) de canaux 2n-1 et 2n à des flux audio secondaires respectifs ; et dans le cas du mode mono non-mixte, l'affectation d'identificateurs (ID) de canaux 2n-1 à des flux de données audio de mode mono non-mixte, dans lequel n représente un ordre de précédence de chaque flux de données audio dans un flux de données A/V.
